# EUROPEAN PATENT SPECIFICATION

(11) **EP 3 368 824 B1**
(45) Date of publication and mention of the grant of the patent: **24.06.2020**
(21) Application number: 16802171.5
(22) Date of filing: 20.10.2016
(51) Int. Cl.: F23C 3/00, F23D 14/02, F23D 99/00, F24H 1/26, F23D 14/10, F28D 7/14

(54) **FIRED HEAT EXCHANGER**
BEHEIZTER WÄRMETAUSCHER
ÉCHANGEUR DE CHALEUR À COMBUSTION

(30) Priority: 26.10.2015 PL 41451615
(43) Date of publication of application: 05.09.2018
(73) Proprietor: AIC Spólka Akcyjna, 81-577 Gdynia (PL)
(72) Inventor: SIEMIENCZUK, Tomasz, 80-351 Gdansk (PL)
(74) Representative: Pomianek, Grazyna
(86) International application number: PCT/PL2016/000115
(87) International publication number: WO 2017/074202

(56) References cited:
- WO-A1-2005/031222
- WO-A1-2015/062619
- US-A- 2 965 079
- US-A- 3 719 173
- US-A- 4 871 308

## Description

The invention concerns a fired heat exchanger.

Known from patent application No. WO2008/61510A2 is a pipe heat exchanger fired with liquid or gas fuel, which contains a flame pipe with a combustion chamber formed inside, where the entire chamber wall is perforated to discharge the fumes. The flame pipe is encased in a jacket, inside of which a chamber for the fumes is formed. On the outside of the jacket which encases the flame pipe there is an external casing of the heat exchanger, where in between the jacket and the casing there is a chamber for the flow of the heated agent, fitted with ribs.

Documents US2965079 and WO2005/031222 disclose fired heat exchanger according to the preamble of claim 1.

The purpose of the invention is to develop such heat exchanger structure which would make it possible to give the exchanger any desired shape, thus enabling fluent scaling of the output power and ensuring the heating of two media simultaneously.

The invention is solved by a fired heat exchanger according to claim 1.

The heat exchanger can be either coiled to form a serpentine or multiple-s shaped, where it can also be fitted with an external casing in the form of a jacket fitted with inlet and outlet stub pipes for the medium heated therein.

The exchanger according to the invention enables fluent scaling of the output power by increasing/ reducing the exchanger length. The exchanger may take different shapes, in particular it can be a multiple-s pipe, or coiled pipe. The exchanger fitted with an additional external casing in the form of a jacket can be used to heat up two media, e.g. water and air, simultaneously.

Further benefits and advantages of the present invention will become apparent after a careful reading of the detailed description with appropriate reference to the accompanying drawings.

In the drawings:
Fig. 1 shows a section of the exchanger in a perspective view;
Fig.2 to Fig. 5 present the exchanger with the combustion chamber of different shapes shown in cross section;
Fig.6 depicts a multiple-s exchanger in a perspective view;
Fig. 7 shows the exchanger coiled into a serpentine, presented in a perspective view;
Fig. 8 shows the exchanger as in Fig. 7 with an external casing, in side view;
Fig. 9 depicts the condensate discharge unit in axial section;
Fig. 10 shows the gas supply unit in axial section.

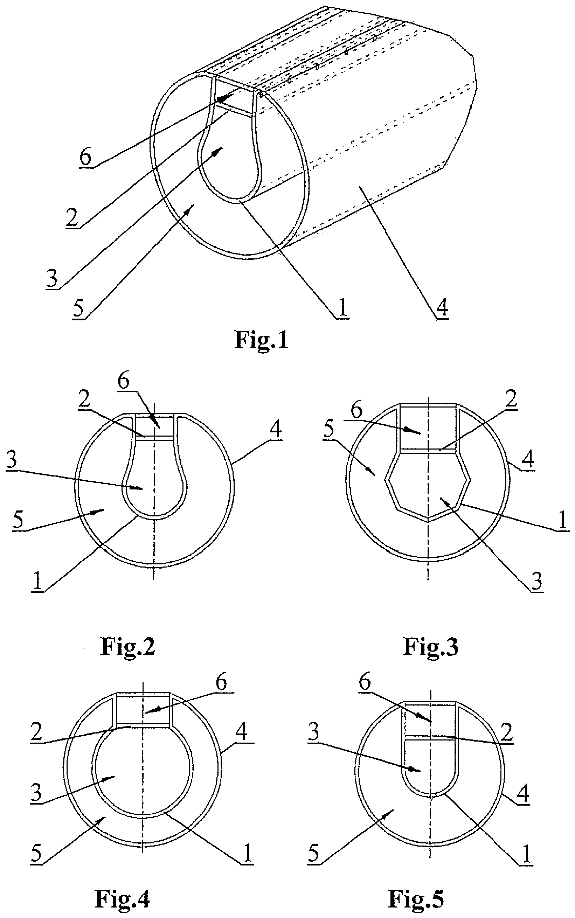

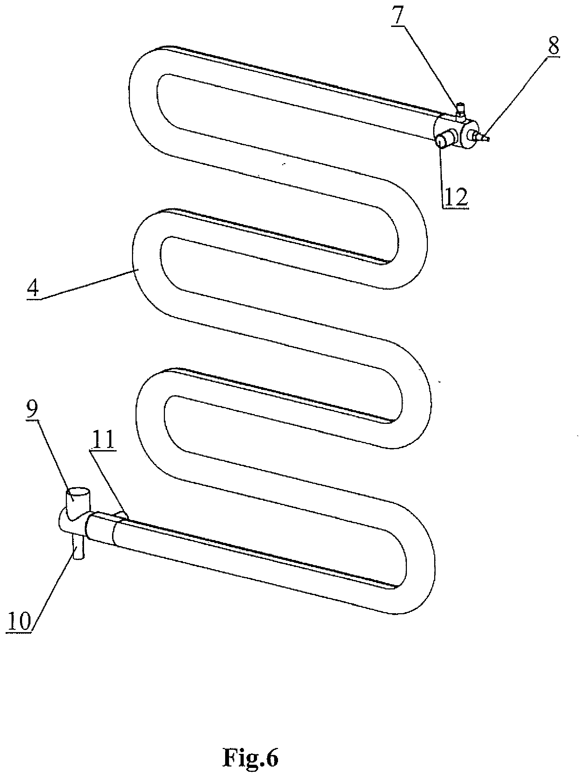

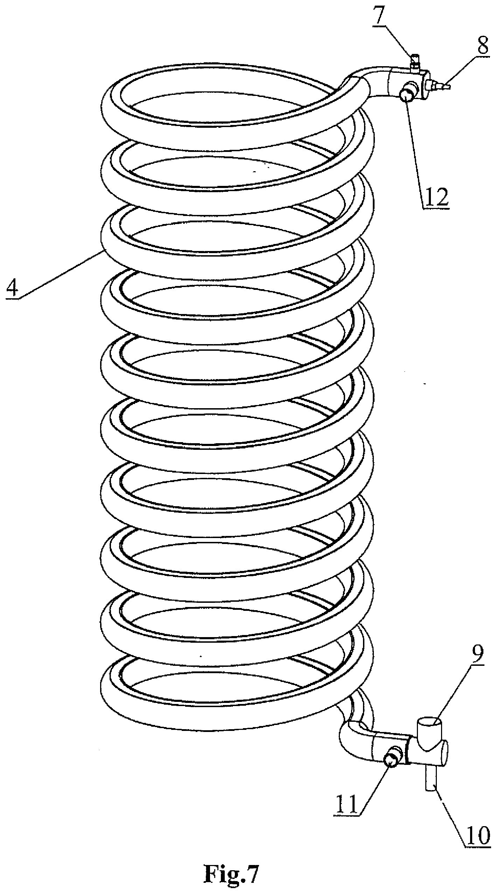

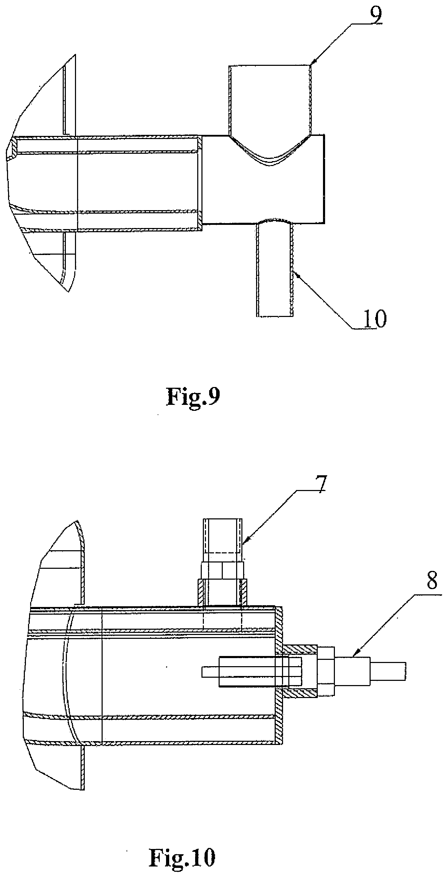

In the exemplary embodiment shown on Fig. 6 a heat exchanger has a pipe 1 shaped into a multiple-s, or in another exemplary embodiment as shown on Fig. 7, the exchanger is coiled to form a serpentine. In both cases, along the whole length of the pipe 1 is made perforation 2 forming the burner. The inside of pipe 1 is formed into a combustion chamber 3 of the shape shown on Fig. 2 or Fig. 3 or Fig. 4 or Fig. 5. The pipe 1 is encased in an external jacket 4. Formed between the pipe 1 in the perforation area and the external jacket 4 is a chamber 5 for the flow of the heated liquid, and formed between the pipe 1 in the area with perforation 2 and the external jacket 4 is a chamber 6 for the gas-and-air fuel mix. Gas is supplied to the chamber 6 through a supply unit 7, as shown on Fig. 10. A spark plug 8 causes ignition of the fuel mix which burns inside the combustion chamber 3. Fumes are discharged from the combustion chamber 3 through a fume outlet 9, and the condensates are discharged through the discharge unit 10, as shown on Fig. 9. The fumes which form inside the combustion chamber 3 heat the liquid supplied to the chamber 5 for the flow of the heated liquid through the inlet stub pipe 11, and the liquid is discharged through the outlet stub pipe 12.

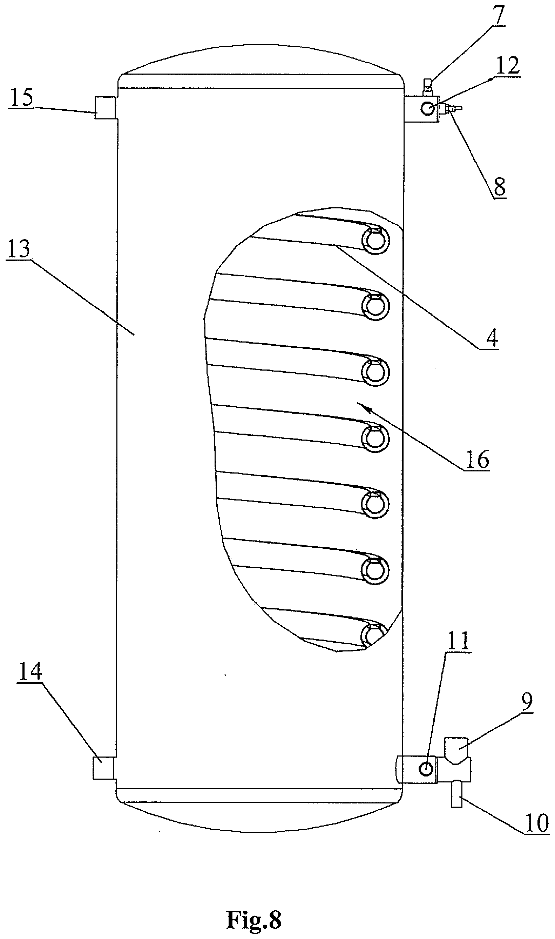

In yet another exemplary embodiment of the invention, as shown on Fig. 8, the exchanger coiled to form a serpentine, as shown on Fig. 7, is fitted with an external casing 13 in the form of a jacket having an inlet stub pipe 14 and outlet stub pipe 15 for the medium heated in its inside 16, such as domestic water or air.

## Claims

1. A fired heat exchanger having a chamber for fuel mixing forming a burner (6), a combustion chamber (3), and a chamber (5) for the flow of a heated liquid, fitted with stub pipes for an inlet and outlet of the heated liquid, wherein said heat exchanger contains a pipe (1) with the combustion chamber (3) formed inside, where there is a perforation (2) on a part of a wall of the pipe (1) which serves as the burner, and said heat exchanger further contains an external jacket (4) encasing the pipe (1), with the chamber (5) for the flow of the heated liquid formed inside the jacket, and the chamber (6) for the fuel mixing fitted over a fragment of the pipe wall featuring the perforation (2), **characterised in that** the perforation (2) is made along the whole length of the pipe (1) forming the combustion chamber and wherein said pipe (1) extends over the entire length of the external jacket.

2. The exchanger according to Claim 1, **characterised in that** it is multiple-s shaped.

3. The exchanger according to Claim 1, **characterised in that** it is coiled to form a serpentine.

## Patentansprüche

1. Ein beheizter Wärmetauscher mit einer Kammer (6) zum Vermischen von Heizstoff, die einen Brenner, eine Verbrennungskammer (3) sowie eine Fließkammer (5) der beheizten Flüssigkeit herausbildet, ausgestattet mit einem Ein- und Auslaufstutzen der beheizten Flüssigkeit, wobei der genannte Wärmetauscher eine Rohrleitung (1) aufweist, in deren Inneren eine Verbrennungskammer (3) herausgebildet ist, wobei an einem Teilbereich der Rohrleitung (1) eine Perforierung (2) ausgeführt ist, die als Brenner fungiert, und der genannte Wärmetauscher umfasst darüber hinaus noch einen Außenmantel (4) um die Rohrleitung (1) herum, mit einer Fließkammer (5) der beheizten Flüssigkeit innerhalb des Mantels, sowie eine Kammer (6) zum Vermischen von Heizstoff über einem Teilbereich der Rohrwand mit der Perforierung (2), **dadurch gekennzeichnet, dass** die Perforierung (2) entlang der gesamten Rohrlänge (1) ausgeführt ist und so eine Verbrennungskammer bildet, sowie die genannte Rohrleitung (1) sich über die gesamte Länge des Außenmantels erstreckt.

2. Wärmetauscher nach Anspruch 1, **dadurch gekennzeichnet, dass** er mehrfach gewickelt ist.

3. Wärmetauscher nach Anspruch 1, **dadurch gekennzeichnet, dass** er schlangenförmig gewickelt ist.

## Revendications

1. Échangeur de chaleur à combustion ayant une chambre (6) formant un brûleur pour mélanger le combustible, une chambre (3) de combustion, et une chambre (5) pour l'écoulement de liquide chauffé équipée d'une entrée et d'une sortie pour le liquide chauffé, dans lequel ledit échangeur de chaleur comprend un tuyau (1) avec une chambre (3) de combustion formée à son intérieur, dans lequel une perforation (2) qui sert de brûleur, est formée sur la partie de paroi du tuyau (1) et ledit échangeur de chaleur comprend en outre une enveloppe extérieure (4) entourant le tuyau (1), avec une chambre (5) pour l'écoulement de liquide chauffé formé à l'intérieur de l'enveloppe, et une chambre (6) pour mélanger le carburant formé sur un fragment de la paroi du tuyau avec perforation (2), **caractérisé en ce que** la perforation (2) est réalisée sur toute la longueur du tuyau (1) formant une chambre de combustion, et ledit tuyau (1) s'étend sur toute la longueur de l'enveloppe extérieure.

2. Échangeur selon la revendication 1, **caractérisé en ce qu'**il est enroulé plusieurs fois.

3. Échangeur selon la revendication 1, **caractérisé en ce qu'**il est enroulé sous forme de serpentine.
